# EUROPÄISCHE PATENTSCHRIFT

(11) **EP 2 874 926 B1**
(45) Veröffentlichungstag und Bekanntmachung des Hinweises auf die Patenterteilung: **14.10.2015**
(21) Anmeldenummer: 14719610.9
(22) Anmeldetag: 27.03.2014
(51) Int. Cl.: B65G 61/00, B65G 1/137

(54) **VERFAHREN UND VORRICHTUNG ZUM BELADEN EINER PALETTE**
METHOD AND DEVICE FOR LOADING A PALETTE
PROCEDE ET DISPOSITIF DE CHARGEMENT D'UNE PALETTE

(30) Priorität: 04.04.2013 DE 102013005615
(43) Veröffentlichungstag der Anmeldung: 27.05.2015
(73) Patentinhaber: Atlantic C Handels- und Beratungs GmbH, 54470 Bernkastel-Kues (DE)
(72) Erfinder: GÄNZ, Rolf, 54470 Bernkastel-Kues (DE)
(74) Vertreter: Tergau, Dietrich
(86) Internationale Anmeldenummer: PCT/EP2014/000826
(87) Internationale Veröffentlichungsnummer: WO 2014/161645

(56) Entgegenhaltungen:
- EP-A1- 2 330 060
- WO-A1-2008/068264
- WO-A1-2012/156355
- DE-A1- 3 417 736
- US-A1- 2007 280 814
- US-A1- 2008 267 759

## Beschreibung

Die vorliegende Erfindung betrifft ein Verfahren zum Herstellen einer Palette mit verschiedenen Einzelgebinden eines kommissionierten Auftrags oder Teilauftrags oder mehrerer Aufträge sowie eine Vorrichtung zur Durchführung dieses Verfahrens.

Das Verfahren besteht in seiner Grundform aus drei Verfahrensschritten. Im ersten Verfahrensschritt werden die Einzelgebinde eines zusammengehörenden Batches in einem Fördermittel, beispielsweise einem Förderwagen angeliefert. Ein Batch ist diejenige Menge von Einzelgebinden, welche in einem Arbeitsgang palettiert werden soll. Ein Batch besteht aus unterschiedlichen Sorten von Einzelgebinden. Die Menge und Zusammensetzung der Einzelgebinde kann deckungsgleich mit der Zusammensetzung eines Einzelauftrags sein, welcher auf einer Palette gepackt werden soll. Ebenso gut ist es aber auch möglich, dass ein Batch lediglich einen Teil eines Auftrags betrifft. Der gesamte Auftrag setzt sich dann aus mehreren Batches oder Teilaufträgen zusammen. Auch ist es möglich, dass ein Batch mehrere kleinere Einzelaufträge umfasst. Ein Batch ist also im Zusammenhang mit der Erfindung stets diejenige Menge von Einzelgebinden, die in einem Palettiervorgang auf die jeweilige Palette zu laden ist. Die auf einer Palette aufzustapelnden Einzelgebinde können hierbei auf mehrere Fördermittel verteilt sein. Auch ist es möglich, dass ein Auftrag aus mehreren Paletten besteht, so dass die zu beladende Palette dann nur einen Teilauftrag umfasst. Auch kann eine Palette aus mehreren Auftragsteilen, sogenannten "Batches" bestehen. Es können auch mehrere Aufträge auf einer Palette zusammengefasst werden.

Im zweiten Verfahrensschritt werden die Einzelgebinde vereinzelt, außenkantenbezogen positioniert und bereitgestellt. Auf die so vereinzelt bereitgestellten Einzelgebinde kann eine Palettiereinrichtung, vorzugsweise ein Palettierroboter zugreifen und die Einzelgebinde definiert auf einer Palette positionieren. Die Einzelgebinde sind dabei so bereit gestellt, dass der Palettierroboter stets auf jedes einzelne Einzelgebinde in beliebiger Reihenfolge zugreifen kann.

In einem letzten dritten Verfahrensschritt werden die Einzelgebinde von der Palettiereinrichtung, vorzugsweise dem Palettierroboter in der erforderlichen Reihenfolge aufgepickt und auf der Palette aufgestapelt.

Vorteilhaft werden die Einzelgebinde auf staudruckarmen Förderern, vorzugweise auf Staurollenförderern mit schräg gestellten Staurollen vereinzelt. Dies hat den Vorteil, dass die hintereinander aufgereihten Einzelgebinde an einen Rand des Staurollenförderers gefördert werden und sich an der Seitenwand dieses Randes gleichsam selbsttätig ausrichten, in dem sie mit einer Außenkante an der Seitenwand des Förderers anliegen.

Zur Durchführung des Verfahrens ist eine Vorrichtung vorgesehen, mit mindestens einem Fördermittel. Das Fördermittel entnimmt aus einem oder mehreren Entnahmeförderern eines Lagers die jeweiligen Einzelgebinde und fördert sie zur Palettierstation. Die Einzelgebinde müssen vor dem Palettieren vereinzelt werden. Hierzu ist es in einer einfachen Variante des Verfahrens möglich, einen Förderwagen als Fördermittel einzusetzen und mit übereinander angeordneten Fächern auszurüsten und in jedes Fach jeweils nur ein Einzelgebinde einzustellen. Es kann der gesamte Förderwagen ausgeschleust werden und als Zwischenspeicher genutzt werden.

Sehr viel vorteilhafter ist jedoch, mehrere Fördermittel bzw. Förderwagen in einer endlosen Förderschleife kontinuierlich an mehreren Entnahmeförderern bzw. Vorrichtungen zur Vereinzelung der Einzelgebinde immer wieder vorbeifahren zu lassen.

Ein derartiges Verfahren und ähnliche gattungsgemäßen Vorrichtungen sind aus der WO 2012/156355 A1 und der WO 2008/068264 A1 bekannt.

Die WO 2012/156355 A1 offenbart bereits Palettierstationen mit Speichern und eine endlose Förderschleife mit mehreren Fördermitteln.

Hiervon ausgehend liegt der Erfindung die Aufgabe zugrunde, ein Verfahren und eine Vorrichtung der eingangs genannten Art hinsichtlich der Bereitstellung der zu palettierenden Einzelgebinde zu verbessern.

Diese Aufgabe ist durch das Verfahren nach Patentanspruch 1 und die Vorrichtung nach Patentanspruch 5 gelöst. Die rückbezogenen Patentansprüche betreffen jeweils vorteilhafte Weiterbildungen des Verfahrens und der Vorrichtung.

Erfindungsgemäß sind die Einzelgebinde in einem Bereitstellungsspeicher mit mehreren übereinander angeordneten Ebenen gespeichert. Diese Ebenen können tribünenartig gestaffelt bzw. terrassenartig angeordnet sein, damit der Palettierroboter sämtliche Einzelgebinde eines Batches (= Auftragsteils) erreichen kann. Bei einer anderen Ausführungsform sind diese übereinander angeordneten Einzelebenen nach Art von Schubladen ausgestaltet. In den Schubladen sind die Einzelgebinde wiederum vorzugsweise außenkantenbezogen positioniert. Beim Palettieren wird jeweils diejenige Schublade geöffnet, aus welcher das jeweilige Einzelgebinde gepickt wird.

In weiterer vorteilhafter Ausgestaltung sind die Lagerfächer des Bereitstellungsspeichers nach Art von Schubladen ausgestaltet zur Bereitstellung an Einzelgebinden zur Entnahme durch den Palettierroboter. Jedem Bereitstellungsspeicher ist vorteilhaft ein Zwischenspeicher vorgeschaltet. Der Zwischenspeicher kann den Inhalt eines Förderwagens aufnehmen und in einem Zug an den nachgeschalteten Bereitstellungsspeicher abgeben.

Schließlich ist es vorteilhaft, an den Entnahmeförderern des Lagers mehrere überund nebeneinander laufende Förderbänder vorzusehen, zur simultanen Einspeisung mehrerer Einzelgebinde in ebenfalls über- und nebeneinander angeordnete Lagerfächer des Förderwagens.

In vorteilhafter Ausgestaltung sind die Fördermittel als Gehänge einer Einschienenhängebahn ausgeführt. Mit einer Einschienenhängebahn ist eine Endlosschleife, die auch als Loop bezeichnet wird, besonders einfach zu realisieren. Zudem benötigt eine Einschienenhängebahn keine Bodenflächen. Vorteilhaft ist es, im Gehänge mehrere neben- und übereinander angeordnete Lagerfächer vorzusehen. Alternativ zu einer Einschienenhängebahn können auch fahrerlose Flurförderzeuge als Fördermittel eingesetzt werden.

Ist ein Staurollenförderer zur Vereinzelung der Einzelgebinde vorgesehen, können die Fächer im Fördermittel oder Gehänge gleichsam etagenweise abgearbeitet werden. Wird ein Bereitstellungsspeicher mit mehreren neben- und übereinander angeordneten Lagerfächern verwendet, können diese direkt, am besten simultan aus dem Förderwagen befüllt werden.

Anhand des in den Zeichnungsfiguren dargestellten Ausführungsbeispiels ist die Erfindung mit weiteren Vorteilen und Einzelheiten beschrieben. Es zeigen:
- Fig. 1: ein automatisiertes Lager mit sieben dargestellten Regalzeilen und drei dargestellten Entnahmefördern sowie eine endlose Förderschleife und einen Bereitstellungsspeicher mit schubladenartig ausgestalteten Lagerfächern,
- Fig. 2: eine Querschnittsdarstellung der Fig. 1 mit zwei Förderwagen, wobei ein Förderwagen von einem Entnahmeförderer eines Lagers befüllt wird und der zweite Förderwagen Einzelgebinde an einen Bereitstellungsspeicher mit schubladenartig ausgestalteten Lagerfächern abgibt,

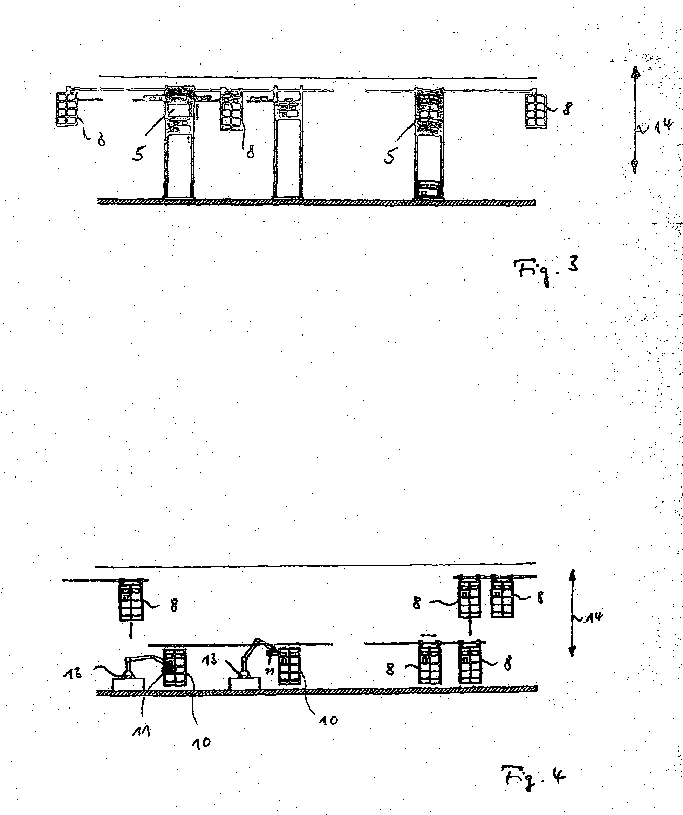

- Fig. 3: eine Seitenansicht von als Gehänge einer Einschienenhängebahn ausgestalteten Förderwagen, welche die Entnahmeförderer eines Lagers passieren sowie
- Fig. 4: eine Seitenansicht mit als Knickarmroboter ausgestalteten Palettierrobotern, welche Einzelgebinde aus einem Bereitstellungsspeicher mit nach Art von Schubladen ausgestalteten Lagerfächern entnehmen.

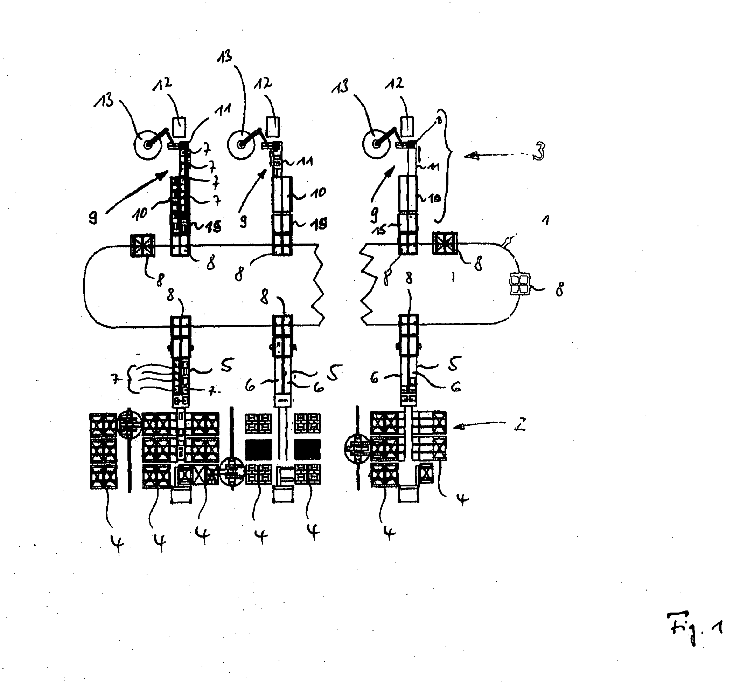

In Fig. 1 ist zunächst die Förderschleife 1 erkennbar. Die Förderschleife 1 verbindet das Lager 2 mit dem Palettierbereich 3. Das Lager 2 besteht aus mehreren nebeneinander angeordneten Regalzeilen 4. Aus den Regalzeilen 4 fördern Entnahmeförderer 5 Einzelgebinde 7 heraus. Die Entnahmeförderer 5 weisen dabei in jeder Förderebene zwei nebeneinander angeordnete Förderbänder 6 auf. Mit Hilfe der Förderbänder 6 werden die Einzelgebinde 7 in Förderwagen 8 eingespeist. Aus der Darstellung der Fig. 1 ist erkennbar, dass mehrere Förderwagen 8 in der Förderschleife 1 aktiv arbeiten können.

Die Förderwagen 8 passieren die einzelnen Entnahmeförderer 5 beim Einspeisen der Einzelgebinde 7 nacheinander und nehmen die zu einem Teilauftrag oder Auftrag gehörenden Einzelgebinde 7 auf. Sobald die Einzelgebinde 7 eines Teilauftrags oder Auftrags in der erforderlichen Anzahl in den Förderwagen 8 eingespeist sind, fährt der Förderwagen 8 eine der dargestellten drei Palettierstationen 9 im Palettierbereich 3 an, um dort die Einzelgebinde 7 abzugeben. In der Palettierstation 9 nimmt ein Zwischenspeicher 15 die Einzelgebinde 7 auf. Der Zwischenspeicher 15 ist so dimensioniert, dass er sämtliche Einzelgebinde 7 eines Förderwagens 8, also ein Batch aufnehmen kann.

Der Zwischenspeicher 15 gibt seinerseits in einem Zug seinen Inhalt, also den bevorrateten Batch, an den ihm jeweils zugeordneten Bereitstellungsspeicher 10 ab. Der Bereitstellungsspeicher 10 weist dabei nach Art von Schubladen 11 ausgebildete Lagerfächer auf. Zum Beladen der Paletten 12 mit den Einzelgebinden 7 greift ein Palettierroboter 13 die jeweiligen Einzelgebinde 7 aus den Schubladen 11 heraus, um sie auf der Palette 12 aufzustellen.

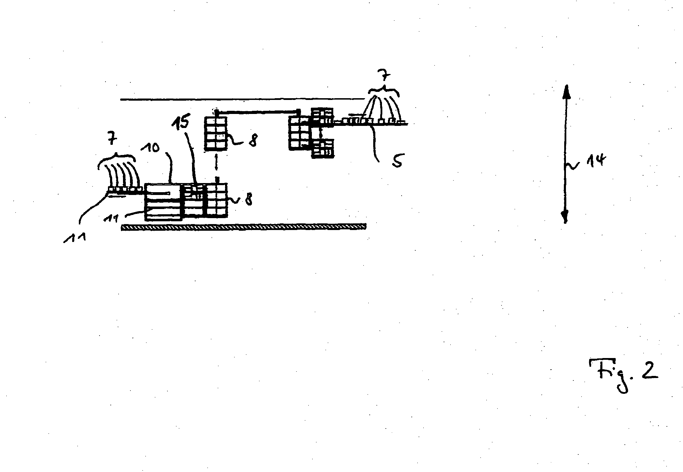

In Fig. 2 ist noch einmal ein Bereitstellungsspeicher 10 mit einer Schublade 11 gezeigt, auf welcher Einzelgebinde 7 aufliegen. Dem Bereitstellungsspeicher 10 ist wiederum der Zwischenspeicher 15 vorgeschaltet. Es ist weiterhin ein Förderwagen 8 gezeigt. Der Förderwagen 8 ist in Vertikalrichtung 14 in seiner Höhe verfahrbar. Diese Verfahrbarkeit dient der Überwindung des Höhenunterschieds zwi schen der bodenfernen Förderschleife 1 und der bodennnahen Palettierstation 9. Der Förderwagen 8 speist den Zwischenspeicher 15, der wiederum den Bereitstellungsspeichers 10 befüllt. In der Darstellung der Fig. 2 ist auch erkennbar, dass der Förderwagen 8 mehrere übereinander und nebeneinander angeordnete Lagerfächer aufweist. Ebenso weist der Bereitstellungsspeicher 10 mehrere übereinander und nebeneinander angeordnete Schubladen 11 auf.

Die Entnahmeförderer 5 weisen vorzugweise eine der Anzahl der nebeneinander angeordneten Lagerfächer im Förderwagen 8 entsprechende Anzahl von nebeneinander angeordneten Förderbändern 6 auf. Die Anzahl der übereinander angeordneten Ebenen von Förderbändern 6 beim Entnahmeförderer 5 entspricht vorteilhaft wiederum der Anzahl von übereinander angeordneten Lagerfachpaaren im Förderwagen 8. Die Förderwagen 8 können auf diese Weise sehr schnell mit den Einzelgebinden 7 befüllt werden.

### Bezugszeichenliste

- 1: Förderschleife
- 2: Lager
- 3: Palettierbereich
- 4: Regalzeile
- 5: Entnahmeförderer
- 6: Förderband
- 7: Einzelgebinde
- 8: Förderwagen
- 9: Palettierstation
- 10: Bereitstellungsspeicher
- 11: Schublade
- 12: Palette
- 13: Palettierroboter
- 14: Vertikalrichtung
- 15: Zwischenspeicher

## Patentansprüche

1. Verfahren zum Herstellen einer Palette (12) mit verschiedenen Sorten von Einzelgebinden (7):
- in einem ersten Verfahrensschritt werden die zu palettierenden Einzelgebinde (7) in Fördermitteln (8) angeliefert;
- in einem zweiten Verfahrensschritt werden die Einzelgebinde (7) zur Palettierung in einem Bereitstellungsspeicher (10) mit mehreren übereinander angeordneten Ebenen gespeichert und bereitgestellt derart, dass eine Palettiereinrichtung auf sämtliche Einzelgebinde (7) Zugriff hat und
- in einem dritten Verfahrensschritt werden die Einzelgebinde (7) in einer von der Palettiereinrichtung vorgegebenen Reihenfolge aufgepickt und auf der Palette (12) aufgestapelt.

2. Verfahren nach Anspruch 1
**dadurch gekennzeichnet,**
**dass** die Einzelgebinde im zweiten Verfahrensschritt vereinzelt und positioniert, vorzugsweise außenkantenpositioniert sind.

3. Verfahren nach Anspruch 2
**dadurch gekennzeichnet,**
**dass** die außenkantenbezögene Positionierung der Einzelgebinde (7) durch eine Aufreihung der Einzelgebinde (7) hintereinander auf einem Staurollenförderer mit schräg angeordneten Staurollen erfolgt.

4. Verfahren nach einem der Ansprüche 1 bis 3
**dadurch gekennzeichnet,**
**dass** die Ebenen nach Art von Schubladen (11) aus dem Bereitstellungsspeicher (10) verfahren werden können zum Einzelzugriff auf jedes Einzelgebinde (7) beim Palettieren.

5. Vorrichtung zur Durchführung eines Verfahrens nach einem der Ansprüche 1 bis 4 mit einem oder mehreren die Einzelgebinde (7) aufnehmenden Fördermitteln (8), mit einer oder mehreren Palettierstationen (9) mit Speichern für die Einzelgebinde (7) und mit einer endlosen Förderschleife (1) als Förderweg des Förderwagens (8) zwischen mehreren Entnahmeförderern (5) eines Lagers zur Aufnahme von Einzelgebinden (7) und einer Palettierstation (9) zur Abgabe und Speicherung der Einzelgebinde (7).
**gekennzeichnet durch**
einen Bereitstellungsspeicher (10) mit mehreren übereinander angeordneten Lagerfächern zur Aufnahme und Bereitstellung der Einzelgebinde (7).

6. Vorrichtung nach Anspruch 5
**gekennzeichnet durch**,
einen dem Bereitstellungsspeicher (10) vorgelagerten Zwischenspeicher (15) als Speicher für die Einzelgebinde (7) in der Palettierstation (9).

7. Vorrichtung nach Anspruch 6
**dadurch gekennzeichnet,**
**dass** das Fördermittel (8) und der Bereitstellungsspeicher (10) mehrere nebenund übereinander angeordnete Lagerfächer zur Aufnahme und Bereitstellung der Einzelgebinde (7) aufweisen.

8. Vorrichtung nach Anspruch 7
**dadurch gekennzeichnet,**
**dass** die Lagerfächer des Bereitstellungsspeichers (10) nach Art von Schubladen (11) ausgestaltet sind.

9. Vorrichtung nach einem der Ansprüche 1 bis 8
**gekennzeichnet durch**
einen Staurollenförderer mit schräg angeordneten Rollen zur Bereitstellung der Einzelgebinde (7) an der Palettierstation (9).

## Claims

1. A method for creating a pallet (12) with various kinds of individual packages (7):
- in a first method step, the individual packages (7) to be palletized are delivered in conveying means (8);
- in a second method step, the individual packages (7) are stored and provided for palletizing in a pick-up storage (10) having a plurality of planes arranged one on top of the other in such a way that a palletizing system has any access to all the individual packages (7), and
- in a third method step, the individual packages (7) are picked in a sequence predetermined by the palletizing system and stacked on the pallet (12).

2. The method of claim 1,
**characterized in that**,
in a second method step, the individual packages (7) are separated and positioned, preferably positioned according to their outer edges.

3. The method of claim 2,
**characterized in that**
the positioning of the individual packages (7) according to their outer edges is effected by lining up the individual packages (7) one behind the other on an accumulating roller conveyor with obliquely arranged accumulating rollers.

4. The method of any of claims 1 to 3,
**characterized in that**
the planes can be moved out of the pick-up storage (10) in the manner of drawers (11) for the purpose of individual access to each individual package (7) during palletizing.

5. A device for performing a method of any of claims 1 to 4, having one or a plurality of conveying means (8) receiving the individual packages (7), having one or several palletizing stations (9) with storage means for the individual packages (7) and with a continuous conveyor loop (1) as the conveying path of the conveyor vehicle (8) between a plurality of withdrawal conveyors (5) of a storage for receiving individual packages (7), and a palletizing station (9) for releasing and storing the individual packages (7),
**characterized by**
a pick-up storage (10) having a plurality of storage shelves arranged one on top of the other for receiving and providing the individual packages (7).

6. The device of claim 5,
**characterized by**
an intermediate storage (15) located in front of the pick-up storage (10) as a storage for the individual packages (7) in the palletizing station (9).

7. The device of claim 6,
**characterized in that**
the conveying means (8) and the pick-up storage (10) include a plurality of storage shelves arranged one beside the other and one on top of the other for receiving and providing the individual packages (7).

8. The device of claim 7,
**characterized in that**
the storage shelves of the pick-up storage (10) are designed in the manner of drawers (11).

9. The device of any of claims 1 to 8,
**characterized by**
an accumulating roller conveyor with obliquely arranged accumulating rollers for providing the individual packages (7) at the palletizing station (9).

## Revendications

1. Procédé pour constituer une palette (12) avec différentes sortes de récipients individuels (7):
- dans une première étape du procédé, les récipients individuels (7) à palettiser sont livrés dans des moyens de transport (8);
- dans une deuxième étape du procédé, les récipients individuels (7) sont stockés et présentés à la palettisation dans un entrepôt de présentation (10) ayant plusieurs plans disposés l'un au-dessus de l'autre de sorte qu'un système de palettisation peut avoir accès indifféremment à tous les récipients individuels (7), et
- dans une troisième étape du procédé, les récipients individuels (7) sont saisis dans un ordre déterminé par le système de palettisation et empilés sur la palette (12).

2. Procédé selon la revendication 1,
**caractérisé en ce que**,
dans une deuxième étape du procédé, les récipients individuels (7) sont séparés et positionnés, de préférence positionnés selon leurs arêtes extérieures.

3. Procédé selon la revendication 2,
**caractérisé en ce que**
le positionnement des récipients individuels (7) selon leurs arêtes extérieures s'effectue en rangeant les récipients individuels (7) l'un derrière l'autre sur un transporteur d'accumulation à rouleaux avec des rouleaux d'accumulation disposés obliquement.

4. Procédé selon l'une quelconque des revendications 1 à 3,
**caractérisé en ce que**
les plans peuvent être déplacés hors de l'entrepôt de présentation (10) à la manière de tiroirs (11) afin d'accéder individuellement à chaque récipient individuel (7) pendant la palettisation.

5. Dispositif pour réaliser un procédé selon l'une quelconque des revendications 1 à 4, ayant un ou plusieurs moyens de transport (8) recevant les récipients individuels (7), ayant un ou plusieurs postes de palettisation (9) avec des moyens de stockage pour les récipients individuels (7) et avec une boucle de transport (1) sans fin en tant que voie de déplacement du chariot de transport (8) entre plusieurs transporteurs de prélèvement (5) d'un entrepôt pour recevoir des récipients individuels (7), et un poste de palettisation (9) pour sortir et stocker les récipients individuels (7),
**caractérisé par**
un entrepôt de présentation (10) ayant plusieurs rayons de stockage disposés l'un au-dessus de l'autre pour recevoir et présenter les récipients individuels (7).

6. Dispositif selon la revendication 5,
**caractérisé par**
un entrepôt intermédiaire (15) situé devant l'entrepôt de présentation (10) en tant qu'entrepôt pour les récipients individuels (7) dans la poste de palettisation (9).

7. Dispositif selon la revendication 6,
**caractérisé en ce que**
les moyens de transport (8) et l'entrepôt de présentation (10) comprennent plusieurs rayons de stockage disposés l'un à côté de l'autre ou l'un au-dessus de l'autre pour recevoir et présenter les récipients individuels (7).

8. Dispositif selon la revendication 7,
**caractérisé en ce que**
les rayons de stockage (10) de l'entrepôt de présentation (10) sont conçus à la manière de tiroirs (11).

9. Dispositif selon l'une quelconque des revendications 1 à 8,
**caractérisé par**
un transporteur d'accumulation à rouleaux avec des rouleaux d'accumulation disposés obliquement pour présenter les récipients individuels (7) au poste de palettisation (9).
